(19) Europäisches Patentamt
European Patent Office
Office européen des brevets

(11) **EP 3 808 428 B1**

(12) **EUROPEAN PATENT SPECIFICATION**

(45) Date of publication and mention
of the grant of the patent:
**22.06.2022   Bulletin 2022/25**

(21) Application number: **19884653.7**

(22) Date of filing: **12.11.2019**

(51) International Patent Classification (IPC):
**B01D 39/20** (2006.01)     **B01D 39/08** (2006.01)
**B01D 39/16** (2006.01)     **B01D 53/86** (2006.01)
**B01D 46/02** (2006.01)     **F23J 15/02** (2006.01)

(52) Cooperative Patent Classification (CPC):
**B01D 39/2017; B01D 39/083; B01D 39/086;**
**B01D 39/1623; B01D 53/8625; B01D 53/8631;**
**F23J 15/025;** B01D 46/02; B01D 53/864;
B01D 53/8668; B01D 2239/0492; B01D 2239/1208;
B01D 2239/1233; B01D 2251/204;
B01D 2251/2062;                               (Cont.)

(86) International application number:
**PCT/JP2019/044252**

(87) International publication number:
**WO 2020/100856 (22.05.2020 Gazette 2020/21)**

(54) **GAS PURIFICATION FILTER, METHOD FOR MANUFACTURING GAS PURIFICATION FILTER, AND GAS PURIFICATION SYSTEM**

GASREINIGUNGSFILTER, VERFAHREN ZUR HERSTELLUNG EINES GASREINIGUNGSFILTERS UND GASREINIGUNGSSYSTEM

FILTRE DE PURIFICATION DE GAZ, PROCÉDÉ DE FABRICATION DE FILTRE DE PURIFICATION DE GAZ ET SYSTÈME DE PURIFICATION DE GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **12.11.2018   JP 2018212103**

(43) Date of publication of application:
**21.04.2021   Bulletin 2021/16**

(73) Proprietor: **MITSUBISHI HEAVY INDUSTRIES, LTD.**
**Chiyoda-ku,**
**Tokyo 100-8332 (JP)**

(72) Inventors:
• **KATSUKI, Masatoshi**
**Tokyo 108-8215 (JP)**
• **SUZUKI, Takumi**
**Tokyo 108-8215 (JP)**
• **MUKAI, Yosuke**
**Tokyo 108-8215 (JP)**

(74) Representative: **Studio Torta S.p.A.**
**Via Viotti, 9**
**10121 Torino (IT)**

(56) References cited:
WO-A1-2018/174137     JP-A- H0 941 257
JP-A- H09 220 466     JP-A- H10 192 655
JP-A- 2001 054 707     JP-A- 2005 137 972
JP-A- 2007 000 850     JP-A- 2014 008 460
JP-A- 2016 049 468     JP-A- 2017 177 046

(52) Cooperative Patent Classification (CPC): (Cont.)
B01D 2251/2067; B01D 2251/208;
B01D 2255/1021; B01D 2255/1023;
B01D 2255/1025; B01D 2255/106;
B01D 2255/20707; B01D 2255/20723;
B01D 2255/20769; B01D 2255/20776;
B01D 2255/915; B01D 2255/9202;
B01D 2255/9205; B01D 2257/2064;
B01D 2257/404; B01D 2257/502; B01D 2257/708;
B01D 2258/0283; F23J 2215/10; F23J 2215/20;
F23J 2217/101; F23J 2219/10

**Description**

TECHNICAL FIELD

The present disclosure relates to a gas purification filter, a method for producing the gas purification filter, and a gas purification system.

BACKGROUND

A combustion system such as a coal-fired boiler, an oil-fired boiler, a general waste incineration plant, an industrial waste incineration plant, or the like includes an exhaust gas treatment device for treating an exhaust gas in a combustion device such as a combustion furnace. The exhaust gas treatment device includes, for example, a desulfurization device, a denitration device, a dust removal device, or the like, and includes, more specifically, for example, a bag filter obtained by forming a gas purification filter into a bag shape.

The gas purification filter includes filter fabric with a catalyst capable of decomposition treatment of toxic components (such as nitrogen oxide, carbon monoxide, and dioxin) in the exhaust gas, in addition to a dust removal treatment of the exhaust gas. In the filter fabric with the catalyst, unlike a structure such as honeycomb, the filter fabric is formed as a fibrous or felt filter obtained by bundling fibers. Moreover, the fabric filter supports, for example, particles of a catalyst (catalyst particles) such as a denitration catalyst, an oxidation catalyst, or a dioxin decomposition catalyst.

An attempt on microparticulation of the catalyst particles has been made in order to improve catalytic performance by increasing a contact area between the catalyst particles and a combustion exhaust gas. For example, Patent Document 1 describes a bag filter (gas purification filter) using a catalyst having a mean particle size of 0.1 μm (for example, see paragraph [0023]). Moreover, Patent Document 2 describes a bag filter (gas purification filter) using a catalyst having a mean particle size of 1 μm (for example, see table 1).

JP 2017 177046 A discloses a bag filter carrying a denitration catalyst; WO 2018/174137 A1 discloses a filter medium and a bag filter for use in exhaust gas elimination. The filter medium is provided with a fiber layer and a catalyst layer wherein the catalyst layer includes a catalyst and fibril fibers as main components; JP 2016 049468 A discloses a manufacturing method of a bag filter, which has a catalyst layer formed on a long cylindrical filter cloth main body.

Citation List

Patent Literature

Patent Document 1: JP2014-8460A
Patent Document 2: JP2014-166614A

SUMMARY

Technical Problem

Meanwhile, as a result of researches by the present inventors, it is found that merely performing microparticulation of the catalyst particles, catalytic performance is not sufficiently improved. This is considered because when the catalyst particles are supported by the filter fabric (corresponding to a filter body to be described later), the catalyst particles penetrate inside the gas purification filter due to microparticulation of the catalyst and clog a gas flow passage inside the gas purification filter, resulting in an excessive increase in differential pressure. Consequently, a gas becomes difficult to flow inside the gas purification filter and a gas throughput is decreased, resulting in an undesired improvement in catalytic performance.

On the other hand, if catalyst particles are merely increased in size, gaps between the catalyst particles are increased, decreasing the differential pressure. However, due to the increase in size of the catalyst, the exhaust gas may pass through the gas purification filter and may not sufficiently contact the catalyst. Thus, catalytic performance is not improved as desired. Therefore, a gas purification technique is required which can improve catalytic performance regardless of the particle size of the catalyst.

An object of at least one embodiment of the present invention is to provide a gas purification filter, a method for producing the gas purification filter, and a gas purification system improved in catalytic performance compared to before.

Solution to Problem

(1) A gas purification filter according to at least one embodiment of the present invention is a gas purification filter which includes a filter body formed by a fiber cloth and a gas purification catalyst supported by the filter body. The gas purification filter has a porosity of not less than 6% and not greater than 20%, the porosity representing a volume of voids occupying a space per unit volume.

With the above configuration (1), focusing on the porosity of the gas purification filter and setting the porosity of the gas purification filter at not less than 6% and not greater than 20%, it is possible to ensure the gas flow passage inside the gas purification filter and to suppress an excessive increase in differential pressure. Thus, it is possible to facilitate the flow of the exhaust gas inside the gas purification filter and to increase a gas throughput. Furthermore, setting the porosity of the gas purification filter at not less than 6% and not greater than 20%, it is possible to easily bring the exhaust gas flowing through the gas flow passage into appropriate contact with particles of the gas purification catalyst and to suppress passing through of the exhaust gas. Therefore, it is possible to increase catalytic efficiency and to improve catalytic performance compared to before.

(2) In some embodiments, in the above configuration (1), the porosity is not less than 7% and not greater than 17%.

With the above configuration (2), it is possible to improve catalytic performance.

(3) In some embodiments, in the above configuration (1) or (2), the filter body has the porosity of not less than 55% and not greater than 82%, and the gas purification catalyst has a mean particle size $D_{50}$ of not less than 1 $\mu$m and not greater than 250 $\mu$m.

With the above configuration (3), it is possible to set the porosity of the gas purification filter at not less than 6% and not greater than 20%.

(3') In some embodiments, in the above configuration (2), the filter body has the porosity of not less than 55% and not greater than 69%, and the gas purification catalyst has a mean particle size $D_{50}$ of not less than 5 $\mu$m and not greater than 50 $\mu$m.

With the above configuration (3'), it is possible to set the porosity of the gas purification filter at not less than 7% and not greater than 17% capable of improving catalytic performance, in particular.

(4) In some embodiments, in any one of the above configurations (1) to (3), the filter body has a basis weight of not less than 500 g/m$^2$ and not greater than 1,300 g/m$^2$.

With the above configuration (4), it is possible to make the filter body coarse to some extent. Thus, it is possible to easily ensure the size of the gas flow passage inside the filter body forming the gas purification filter.

(5) In some embodiments, in any one of the above configurations (1) to (4), a fiber contained in the filter body includes any one of polyester fiber, polyamide fiber, polyphenylene-sulfide fiber, polyacrylic fiber, polypropylene fiber, polyimide fiber, glass fiber, and polyfluoroethylene fiber.

With the above configuration (5), it is possible to suitably configure the gas purification filter improved in catalytic performance compared to before.

(6) In some embodiments, in the above configuration (5), the fiber has a largest diameter of not greater than 15 $\mu$m in a fiber cross-section.

With the above configuration (6), it is possible to suitably configure the gas purification filter improved in catalytic performance compared to before, in particular.

(7) A method for producing a gas purification filter according to at least one embodiment of the present invention is a method for producing a gas purification filter including a filter body formed by a fiber cloth and a gas purification catalyst supported by the filter body, the method including a preparation step of preparing the filter body, a mean particle size decision step of deciding, based on a porosity of the prepared filter body, a mean particle size $D_{50}$ of the gas purification catalyst such that the gas purification filter has the porosity of not less than 6% and not greater than 20%, the porosity representing a volume of voids occupying a space per unit volume, and a support step of supporting the gas purification catalyst having the decided mean particle size $D_{50}$ by the filter body.

With the above configuration (7), focusing on the porosity of the gas purification filter and setting the porosity of the gas purification filter at not less than 6% and not greater than 20%, it is possible to ensure the gas flow passage inside the gas purification filter and to suppress an excessive increase in differential pressure. Thus, it is possible to facilitate the flow of the exhaust gas inside the gas purification filter and to increase the gas throughput. Furthermore, setting the porosity of the gas purification filter at not less than 6% and not greater than 20%, it is possible to easily bring the gas into appropriate contact with the particles of the gas purification catalyst when the exhaust gas flows through the gas flow passage, and to suppress passing through of the exhaust gas. Therefore, it is possible to increase catalytic efficiency and to improve catalytic performance compared to before.

(8) In some embodiments, in the above method (7), the support step is performed by a spray method.

With the above method (8), regardless of the particle size of the gas purification catalyst, it is possible to support the gas purification catalyst by the filter body by an amount in which the porosity of the gas purification filter is not less than 6% and not greater than 20%.

(9) A gas purification system according to at least one embodiment of the present invention is a gas purification system for purifying an exhaust gas from a combustion device, which includes a gas purification device inside which the gas purification filter according to any one of the above configurations (1) to (6) is disposed.

With the above configuration (9), it is possible to purify the exhaust gas by using the gas purification device which includes the gas purification filter improved in catalytic performance compared to before. Thus, it is possible to increase a purification flow rate of the exhaust gas and to efficiently purify the exhaust gas.

(10) In some embodiments, in the above configuration (9), the gas purification catalyst includes a denitration catalyst, and the gas purification system further comprises a supply device for supplying a reducing agent for nitrogen oxide to a gas flowing upstream of the gas purification filter.

With the above configuration (10), in the denitration catalyst supported by the gas purification filter, it is possible to perform denitration of the exhaust gas by using the reducing agent.

Advantageous Effects

According to at least one embodiment of the present invention, it is possible to provide a gas purification filter, a method for producing the gas purification filter, and a gas purification system improved in catalytic performance compared to before.

BRIEF DESCRIPTION OF DRAWINGS

FIG. 1 is an overall configuration view of a bag filter including a gas purification filter according to an embodiment of the present invention.

FIG. 2 is a view schematically showing a cross-section of a gas purification filter according to an embodiment of the present invention.

FIG. 3 is a view schematically showing a cross-section of the gas purification filter according to an embodiment of the present invention, and is a view schematically showing a cross-section of the gas purification filter which includes a gas purification catalyst having a smaller particle size than a gas purification catalyst shown in FIG. 2.

FIG. 4 is a graph indicating a relationship between a differential pressure and a porosity of the gas purification filter.

FIG. 5 is a graph indicating a relationship between the porosity of the gas purification filter and the ratio of reaction rate indicating catalytic performance.

FIG. 6 shows graphs indicating a relationship between the porosity of the gas purification filter and a mean particle size of the gas purification catalyst.

FIG. 7 shows graphs indicating the relationship between the porosity of the gas purification filter and the mean particle size of the gas purification catalyst, and shows graphs different in maximum value on the horizontal axis from FIG. 6.

FIG. 8 shows graphs indicating a temporal change in ratio of reaction rate between Example and Comparative Example.

FIG. 9 is a flowchart showing a method for producing the gas purification filter according to an embodiment of the present invention.

FIG. 10 is a system diagram of a gas purification system according to an embodiment of the present invention.

DETAILED DESCRIPTION

Some embodiments of the present invention will be described below with reference to the accompanying drawings. Contents described as embodiments and contents shown in the drawings below are merely examples, and can be embodied with any modification within a scope that does not depart from the present invention. Further, two or more embodiments may optionally be combined in any manner. Further, in the following embodiments, similar elements will be indicated by the same reference numerals, and redundant descriptions thereof will be omitted for convenience.

It is intended, however, that unless particularly identified, dimensions, materials, shapes, relative positions and the like of constituent components described as the embodiments or shown in the drawings shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, for instance, an expression of a shape such as a rectangular shape or a tubular shape shall not be construed as only the geometrically strict shape, but also includes a shape with unevenness or chamfered corners within the range in which the same effect can be achieved.

On the other hand, the expressions "comprising", "including", "having", "containing", and "constituting" one constituent component are not exclusive expressions that exclude the presence of other constituent components.

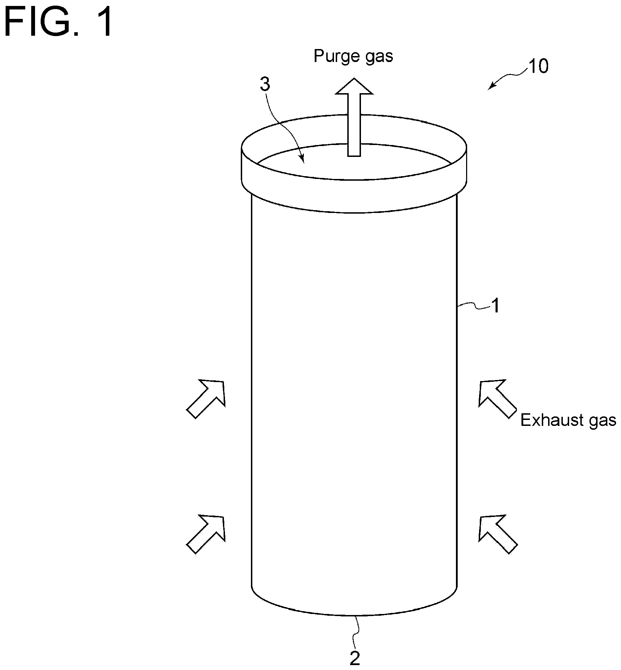

FIG. 1 is an overall configuration view of a bag filter 10 including a gas purification filter 20 according to an embodiment of the present invention. The bag filter 10 is formed into a bag shape which includes a tubular portion 1 configured by forming the gas purification filter 20 (not shown in FIG. 1, but will be described later) into a tubular shape, and a lid portion 2 disposed at one end of the tubular portion 1 and formed by the gas purification filter 20. At one end of the bag filter 10, an annular ring (not shown) is mounted, and the annular ring forms an opening portion 3. The annular ring is formed by an elastically deformable spring steel.

In the bag filter 10, an exhaust gas from a combustion device such as a combustion furnace is transmitted through the tubular portion 1 and the lid portion 2, thereby penetrating inside the bag filter 10. In the above-described transmission, the exhaust gas contacts a gas purification catalyst 12 (not shown in FIG. 1, but will be described later) supported by the gas purification filter 20 forming the bag filter 10. Then, after the exhaust gas is purified by contacting the gas purification catalyst 12, the penetrated exhaust gas is discharged from the opening portion 3 to the outside of the bag filter 10 as a purge gas.

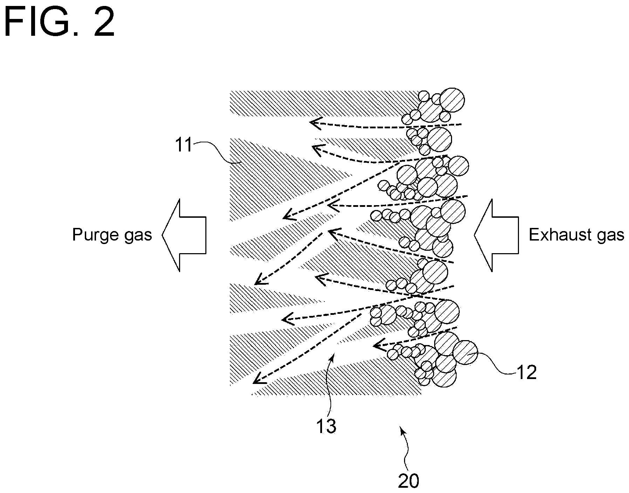

FIG. 2 is a view schematically showing a cross-section of the gas purification filter 20 according to an embodiment of the present invention. The structure shown in FIG. 2 is merely an example of the structure of the gas purification filter 20 forming the bag filter 10, and can optionally be modified within a range without departing from the scope of the present invention, for example, the gas purification catalyst 12 penetrates inside a filter body 11.

The gas purification filter 20 includes the filter body 11 formed by a fiber cloth and the gas purification catalyst 12 supported by the filter body 11. The exhaust gas flows from one side to another side through a gas flow passage 13 formed inside the filter body 11. The gas flow passage 13 is formed between fibers contained in the fabric cloth. When the exhaust gas flows through the gas flow passage 13, the exhaust gas contacts the gas purification catalyst 12 supported by the filter body 11, thereby purifying the exhaust gas.

The filter body 11 is formed by, for example, a flexible material without rigidity. More specifically, the filter body 11 is formed by a cloth (fabric cloth) obtained by weaving optional fiber with various weaves such as twill weave, satin weave, and plain weave, as well as by a non-woven cloth produced by a needlepunched method or the like.

A fiber contained in the filter body 11 includes polyester fiber, polyamide fiber, polyphenylene-sulfide fiber, polyacrylic fiber, polypropylene fiber, polyimide fiber, glass fiber, polyfluoroethylene fiber, or the like. Among the above-described fibers, glass fiber and polyfluoroethylene fiber are desirable in terms of high heat resistance thereof. Moreover, the diameter of fiber is preferably not less than $3\mu$m and not greater than $15$ $\mu$m as the longest (largest) diameter in a fiber cross-section.

The basis weight (weft density) of the fabric cloth forming the filter body 11 is, for example, not less than 400 g/m$^2$ and preferably not less than 500 g/m$^2$, and the upper limit of the basis weight is, for example, not greater than 1,300 /m2 and preferably not greater than 1,200 g/m$^2$. With the basis weight of not less than 400 g/m$^2$, it is possible to sufficiently capture soot and dust. Moreover, with the basis weight of not less than 500 g/m$^2$, it is possible to make the filter body 11 coarse to some extent. Thus, it is possible to easily ensure the size of the gas flow passage inside the filter body 11 forming the gas purification filter 20.

On the other hand, with the basis weight of not greater than 1,300 g/m$^2$, it is possible to suppress clogging. Moreover, with the basis weight of not greater than 1,200 g/m$^2$, it is possible to make the filter body 11 coarse to some extent. Thus, it is possible to easily ensure the size of the gas flow passage inside the filter body 11 forming the gas purification filter 20.

Moreover, defining a volume of voids occupying a space per unit volume as the "porosity", it is preferable that the porosity of the filter body 11 is not less than 55% and not greater than 82%, and a mean particle size $D_{50}$ of the gas purification catalyst 12 is not less than 1 $\mu$m and not greater than 250 $\mu$m. Thus, the gas purification filter 20 can have the porosity of not less than 6% and not greater than 20%. Furthermore, it is preferable that the porosity of the filter body 11 is not less than 55% and not greater than 69%, and the mean particle size $D_{50}$ of the gas purification catalyst 12 is not less than 5 $\mu$m and not greater than 50 $\mu$m. Thus, it is possible to set the porosity of the gas purification filter 20 at not less than 7% and not greater than 17% capable of improving catalytic performance, in particular.

In the present specification, a porosity $\varepsilon$ of the filter body 11 can be calculated by:

$$\epsilon=100-100\times\gamma/(\Delta t\times\rho_{fib}) \qquad\qquad ...(1)$$

where $\gamma$ is a basis weight (g/m$^2$) of the filter body 11, $\Delta t$ is a thickness (m) of the filter body 11, and $\rho_{fib}$ is a density (g/m$^3$) of fiber contained in the filter body 11.

Moreover, in the present specification, the mean particle size $D_{50}$ of the gas purification catalyst 12 refers to a mean particle size measured by a laser diffraction particle size distribution measuring device.

The thickness of the filter body 11 is, for example, not less than 0.5 mm and not greater than 15 mm. If the filter body 11 is formed by the fabric cloth or the non-woven cloth, the thickness of the filter body 11 may have a value about 30% of its average value.

The gas purification catalyst 12 supported by the filter body 11 is provided to decompose and remove, from the exhaust gas flowing through the gas flow passage inside the filter body 11, toxic components in the exhaust gas by contacting the exhaust gas. The toxic components herein are, for example, nitrogen oxide (nitrogen monoxide and nitrogen dioxide), carbon monoxide, dioxin, volatile organic compound, and the like. Therefore, it is only necessary to decide a specific component of the gas purification catalyst 12 depending on the type of removed toxic component.

For example, when denitration of the exhaust gas is performed, it is possible to cause the gas purification catalyst 12 to include a denitration catalyst having a denitration function. As the denitration catalyst, for example, a titanium-vanadium-based catalyst containing titanium oxide, vanadium pentoxide, molybdenum oxide, tungsten oxide, and the like can be given. Moreover, when carbon monoxide in the exhaust gas is decomposed and removed, it is possible to cause the gas purification catalyst 12 to include an oxidation catalyst having an oxidation function. Moreover, the gas purification catalyst 12 may include a catalyst having a plurality of functions in one component (for example, a catalyst having both of denitration and oxidation). As the oxidation catalyst, for example, a catalyst supporting active metals such as platinum, palladium, rhodium, gold, and the like by at least one type of inorganic oxide selected from a group composed of silica, titania, zeolite, and alumina.

The gas purification catalyst 12 has the mean particle size $D_{50}$ of, for example, not less than 1 $\mu$m and not greater than 25 $\mu$m, as described above. However, it is preferable to set, based on the porosity of the filter body 11 supporting the gas purification catalyst 12, the mean particle size $D_{50}$ of the gas purification catalyst 12 to the mean particle size $D_{50}$ in which the porosity of the gas purification filter 20 including the gas purification catalyst 12 is not less than 6% and not greater than 20%, the details of which are to be described later. More specifically, for example, it is preferable that the mean particle size $D_{50}$ of the gas purification catalyst is not less than 1 $\mu$m and not greater than 250 $\mu$m, if the porosity of the filter body 11 is not less than 55% and not greater than 82%. Moreover, for example, it is preferable that the mean particle size $D_{50}$ of the gas purification catalyst is not less than 5 $\mu$m and not greater than 50 $\mu$m, if the porosity of the filter body 11 is not less than 55% and not greater than 69%.

The porosity (representing the volume of voids occupying a space per unit volume) of the gas purification filter 20 according to an embodiment of the present invention is not less than 6% and preferably not less than 7%, and an upper limit of the porosity is not greater than 20% and preferably not greater than 17%. Thus, focusing on the porosity of the gas purification filter 20 and setting the porosity of the gas purification filter 20 at not less than 6% and not greater than 20%, it is possible to ensure the gas flow passage 13 inside the gas purification filter 20 and to suppress an excessive increase in differential pressure. Thus, it is possible to facilitate the gas flow inside the gas purification filter 20 and to increase a gas throughput.

Furthermore, setting the porosity of the gas purification filter 20 at not less than 6% and not greater than 20%, it is possible to easily bring the gas flowing through the gas flow passage 13 into appropriate contact with particles of the gas purification catalyst 12 and to suppress passing through of the gas. Therefore, it is possible to increase catalytic efficiency and to improve catalytic performance compared to before. In particular, setting the porosity of the gas purification filter 20 at not less than 7% and not greater than 17%, it is possible to sufficiently ensure the gas flow passage 13 inside the gas purification filter 20 and to sufficiently suppress the excessive increase in differential pressure. Thus, it is possible to improve catalytic performance, in particular.

The porosity of the gas purification filter 20 can be decided based on, for example, a differential pressure $\Delta P$ when the exhaust gas of the gas purification filter 20 flows and a gas average flow velocity $u_m$ (equal to the average superficial velocity $u_m$). More specifically, the porosity can be decided as follows.

First, with respect to a first gas purification filter and a second gas purification filter (two types of gas purification filters 20) supporting the gas purification catalyst 12 having different mean particle sizes, actual flow velocities $u_{01}$ and $u_{02}$ in the filter fabric when the exhaust gas flows at the average superficial velocity $u_m$ are set, respectively. Furthermore, with respect to the first gas purification filter and the second gas purification filter, differential pressures $\Delta P_1$ and $\Delta P_2$ on the inlet side and the outlet side of the first gas purification filter and the second gas purification filter when the exhaust gas flows at the average superficial velocity $u_m$ are set, respectively. Then, a proportional relationship holds between $\Delta P_2/\Delta P_1$ and $u_{02}/u_{01}$. Therefore, the following equation (2) holds (A is a proportionality constant):

$$\Delta P_2/\Delta P_1 = A \times u_{o2}/u_{o1} \qquad\qquad ...(2)$$

Moreover, if the porosity of the filter body 11 is the same and the mean particle size $D_{50}$ of the gas purification catalyst 12 is different, the porosities of the gas purification filter 20 which includes the gas purification catalyst 12 having the different mean particle size $D_{50}$ are $\varepsilon_1$ and $\varepsilon_2$, respectively. Then, between the porosities $\varepsilon_1$, $\varepsilon_2$ and the actual flow velocities $u_{o1}$, $u_{o2}$ in the filter fabric, the following equation (3) holds:

$$u_{o2}/u_{o1} = \{u_m/\varepsilon_2\}/\{u_m/\varepsilon_1\} \qquad\qquad ...(3)$$

Therefore, with the above-described equations (2) and (3), the following equation (4) holds:

$$\Delta P_2/\Delta P_1 = A \times u_{o2}/u_{o1} = A \times \{u_m/\varepsilon_2\}/\{u_m/\varepsilon_1\} \qquad\qquad ...(4)$$

Assume that the mean particle size $D_{50}$ of the gas purification catalyst 12 supported by the filter body 11 is infinitely small, that is, the gas purification catalyst 12 is not supported by the filter body 11. At this time, the porosity of the gas purification filter 20 including the gas purification catalyst 12 whose mean particle size $D_{50}$ is infinitely small matches that of the filter body 11 which does not support the gas purification catalyst 12. Thus, with the porosity $\varepsilon_1$ of the gas purification filter 20 at this time, it is possible to calculate the proportionality constant A by the differential pressure $\Delta P_1$, the known porosity $\varepsilon_1$, and the gas average flow velocity $u_m$ (average superficial velocity $u_m$). Then, it is possible to calculate the porosity $\varepsilon_2$ of the gas purification filter 20 including the optional gas purification catalyst 12, regardless of the mean particle size $D_{50}$, by the gas average flow velocity $u_m$ (average superficial velocity $u_m$), the calculated proportionality constant A, and the actually measured $\Delta P_2$ and $u_{o2}$.

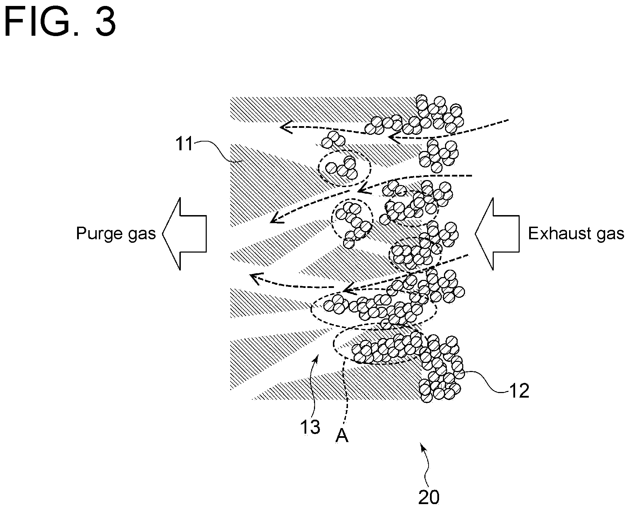

The relationship between the porosity and the gas flow passage 13 will be described here with new reference to FIG. 3, in addition to FIG. 2 described above.

FIG. 3 is a view schematically showing a cross-section of the gas purification filter 20 according to an embodiment of the present invention, and is a view schematically showing a cross-section of the gas purification filter 20 which includes the gas purification catalyst 12 having a smaller particle size than the gas purification catalyst 12 shown in FIG. 2 described above. The structure shown in FIG. 3 is merely an example of the structure of the gas purification filter 20 forming the bag filter, and can optionally be modified within the range without departing from the scope of the present invention, for example, the gas purification catalyst 12 penetrates inside the filter body 11.

First, as shown in FIG. 2 described above, sufficient gaps are generated between the particles of the gas purification catalyst 12 if the mean particle size of the gas purification catalyst 12 is large to some extent. Thus, the exhaust gas is likely to flow into the gas flow passage 13 formed inside the filter body 11. In particular, when the gas flows between the particles of the gas purification catalyst 12, the exhaust gas flows in contact with the gas purification catalyst 12. As a result, a geometrical contact area between the exhaust gas and the gas purification catalyst 12 increases, improving purification treatment performance of the exhaust gas by the catalyst. That is, catalytic performance is improved.

Moreover, since the mean particle size of the gas purification catalyst 12 is large to some extent, the gas purification catalyst 12 is less likely to penetrate inside the gas flow passage 13 when the gas purification catalyst 12 is supported by the filter body 11. As a result, the gas purification catalyst 12 is supported in the vicinity of the surface of the filter body 11. Then, since penetration of the gas purification catalyst 12 to the inside of the gas flow passage 13 is suppressed, clogging of the gas flow passage 13 is also suppressed, the exhaust gas is likely to flow through the gas flow passage 13 as indicated by dashed arrows in FIG. 2. As a result, an increased in differential pressure of the gas purification filter 20 is suppressed.

On the other hand, as shown in FIG. 3 if the mean particle size of the gas purification catalyst 12 is small to some extent, the gaps formed between the particles of the gas purification catalyst 12 are small. Thus, as a result, the geometrical contact area between the exhaust gas and the gas purification catalyst 12 decreases, degrading the purification treatment performance of the exhaust gas by the catalyst. That is, catalytic performance is less likely to be improved.

Moreover, since the gaps formed between the particles of the gas purification catalyst 12 are small, the exhaust gas is less likely to flow into the gas flow passage 13 formed inside the filter body 11. Furthermore, when the gas purification catalyst 12 is supported by the filter body 11, the gas purification catalyst 12 is likely to penetrate inside the gas flow passage 13, and the gas flow passage 13 is likely to be clogged as indicated by A portions surrounded by dashed lines, respectively, in FIG. 3. Thus, the differential pressure is likely to increase.

However, even if the mean particle size of the gas purification catalyst 12 is small to an extent as shown in FIG. 3, when the porosity of the filter body 11 is high and the size of the gas flow passage 13 is sufficiently large, the gas flow passage 13 is less likely to be clogged despite penetration of the gas purification catalyst 12 to the inside of the gas flow passage 13. Therefore, in this case, the differential pressure is less likely to increase. Moreover, although the gas purification catalyst 12 is supported by a wall surface (that is, an outer surface of fiber) of the gas flow passage 13, the gas flow passage 13 is sufficiently ensured, resulting in large gaps between the particles of the gas purification catalyst 12. As a result, the geometrical contact area between the exhaust gas and the gas purification catalyst 12 increases, improving purification treatment performance of the exhaust gas by the catalyst. That is, catalytic performance is improved.

Therefore, even if catalytic performance is to be improved with the mean particle size of the gas purification catalyst 12 as an indicator, expected catalytic performance cannot be obtained depending on the size of the gas flow passage 13. Thus, in an embodiment of the present invention, ensuring the gas flow passage 13 with the sufficiently size, both of suppression of the increase in differential pressure, and the large contact area between the exhaust gas and the gas purification catalyst 12 are achieved. More specifically, both of suppression of the increase in differential pressure, and the large contact area between the exhaust gas and the gas purification catalyst 12 are achieved by setting the porosity of the gas purification filter 20 at not less than 6% and not greater than 20%.

That is, in an embodiment of the present invention, focusing on the porosity of the gas purification filter 20 and setting the porosity of the gas purification filter 20 at not less than 6% and not greater than 20%, it is possible to ensure the gas flow passage 13 inside the gas purification filter 20 and to suppress the excessive increase in differential pressure. Thus, it is possible to facilitate the flow of the exhaust gas inside the gas purification filter 20 and to increase the gas throughput. Furthermore, setting the porosity of the gas purification filter 20 at not less than 6% and not greater than 20%, it is possible to easily bring the exhaust gas flowing through the gas flow passage 13 into appropriate contact with the particles of the gas purification catalyst 12 and to suppress passing through of the exhaust gas. Therefore, it is possible to increase catalytic efficiency and to improve catalytic performance compared to before.

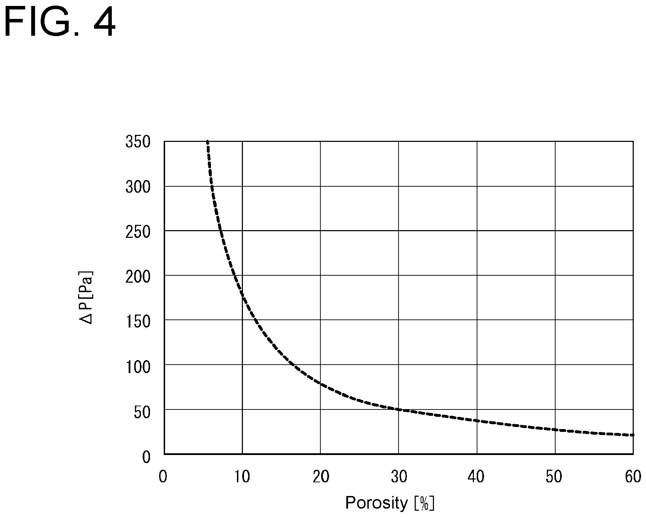

FIG. 4 is a graph indicating a relationship between the differential pressure and the porosity of the gas purification filter 20. The graph represented by a dashed line indicates the relationship between the differential pressure and the porosity in the gas purification filter 20 by which particles of a titanium-vanadium-based denitration catalyst are supported with respect to the filter body 11 having the porosity of 62% as an example. As shown in FIG. 4, the differential pressure $\Delta P$ is high as the porosity of the gas purification filter 20 is low. Then, although not shown, the differential pressure $\Delta P$ is infinite if the porosity is not more than a certain constant value, stopping the flow of the exhaust gas. On the other hand, the differential pressure $\Delta P$ is low as the porosity is high. Therefore, in order to merely decrease the differential pressure $\Delta P$, it is preferable that the porosity of the gas purification filter 20 is high.

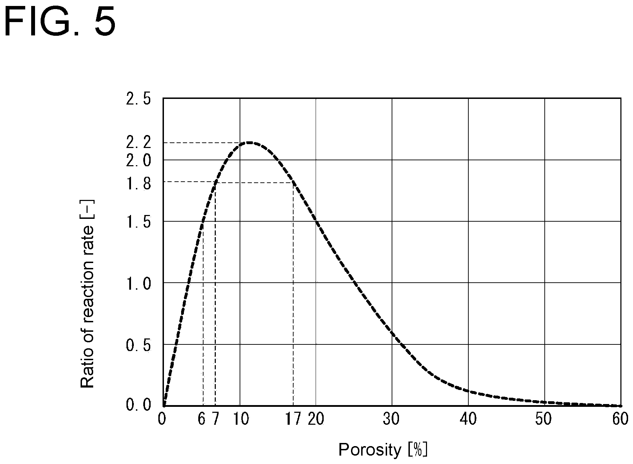

FIG. 5 is a graph indicating a relationship between the porosity of the gas purification filter 20 and the ratio of reaction rate indicating catalytic performance. The graph represented by a dashed line indicates the same gas purification filter 20 as that in the graph shown in FIG. 4 described above. Moreover, the vertical axis indicates the ratio of reaction rate (the ratio of denitration reaction rate) by the titanium-vanadium-based denitration catalyst and indicates that catalytic performance is high as the ratio of reaction rate is high, as an example. As the ratio of reaction rate, a relative value when a reaction rate constant of the conventional gas purification filter (the bag filter described above in Patent Document 1) is 1.0.

As shown in FIG. 5, the porosity and the ratio of reaction rate do not have a simple correlation. That is, although the ratio of reaction rate is also low (that is, catalytic performance is low) as the porosity is low, the ratio of reaction rate does not necessarily increase (catalytic performance does not necessarily improve) by merely increasing the porosity. That is, although the ratio of reaction rate also increases along with the increase in porosity when the porosity is from 0% to about 10%, the ratio of reaction rate turns downward after the porosity of about 10%, and the ratio of reaction rate decreases if the porosity exceeds about 10%. Thus, if the porosity exceeds about 10%, although the differential pressure $\Delta P$ decreases along with the increase in porosity (see FIG. 4), the ratio of reaction rate decreases.

Then, in an embodiment of the present invention, it is found that setting the porosity of the gas purification filter 20 at not less than 6% and not greater than 20%, the ratio of reaction rate can be not less than 1.5 as shown in FIG. 5. Therefore, with the porosity of not less than 6% and not greater than 20%, it is possible to obtain the gas purification filter 20 having the reaction rate constant half as large again as the reaction rate constant in the conventional gas purification filter. Thus, it is possible to obtain the gas purification filter 20 improved in catalytic performance.

In particular, setting the porosity at not less than 7% and not greater than 17%, it is possible to increase the ratio of reaction rate about twofold (about 1.8 fold to 2.2 fold). A catalytic quantity can be decreased by half if the reaction rate is increased twofold, making it possible to accordingly reduce the differential pressure. Moreover, if the reaction rate is increased twofold, it is possible to simultaneously perform a series of exhaust gas treatments such as desulfurization, denitration, dust removal, and demineralization with the same device size as the conventional one (just by replacing the bag filter). Therefore, with the porosity of not less than 7% and not greater than 17%, it is possible to obtain the gas purification filter 20 having the reaction rate constant about twice as large as the reaction rate constant in the conventional gas purification filter. Thus, it is possible to obtain the gas purification filter 20 improved in catalytic performance, in particular.

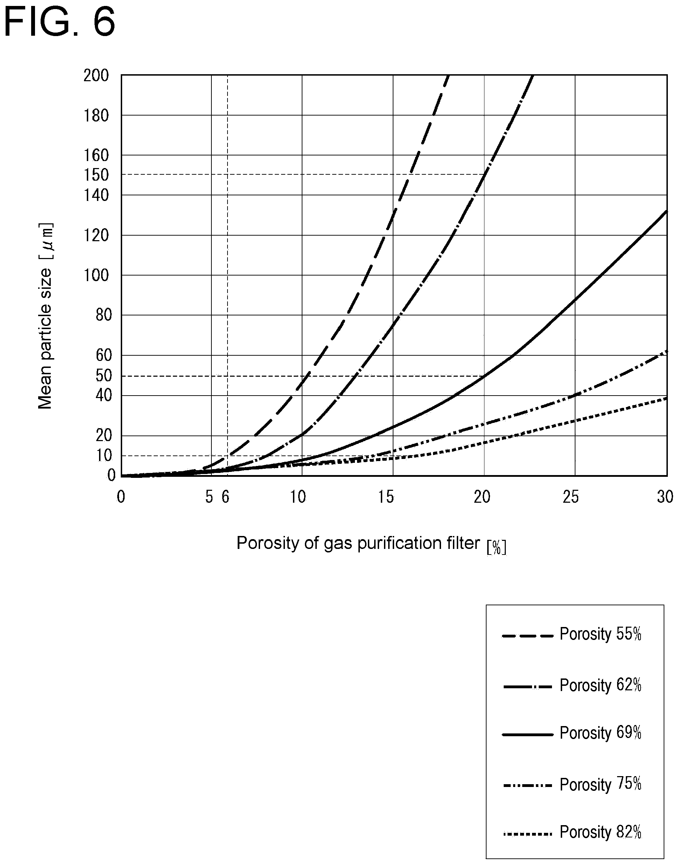

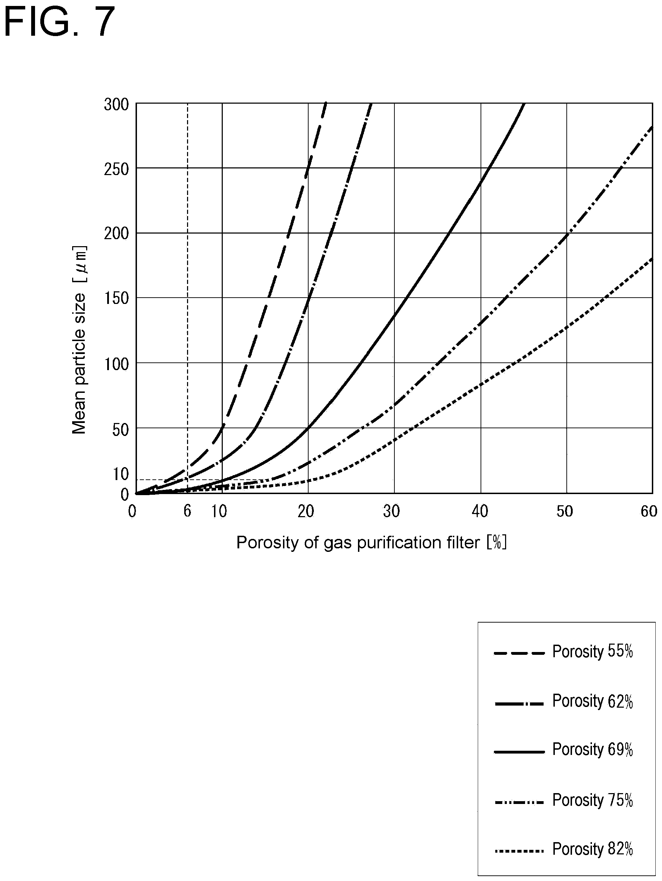

FIG. 6 shows graphs indicating a relationship between the porosity of the gas purification filter 20 and the mean particle size of the gas purification catalyst 12. Moreover, FIG. 7 shows graphs indicating the relationship between the porosity of the gas purification filter and the mean particle size of the gas purification catalyst, and shows graphs different in maximum value on the horizontal axis from FIG. 6. More specifically, the maximum value on the horizontal axis is 30% in FIG. 6, whereas 60% in FIG. 7.

The dashed line graphs shown in FIGs. 6 and 7 each show, in the gas purification filter 20 where the gas purification catalyst 12 is supported by the filter body 11 having the porosity of 55%, the relationship between the porosity of the gas purification filter 20 and the mean particle size of the catalyst particles. Moreover, the single-dotted chain line graphs shown in FIGs. 6 and 7 each show, in the gas purification filter 20 where the gas purification catalyst 12 is supported by the filter body 11 having the porosity of 62%, the relationship between the porosity of the gas purification filter 20 and the mean particle size of the catalyst particles.

Further, the solid line graphs shown in FIGs. 6 and 7 each show, in the gas purification filter 20 where the gas purification catalyst 12 is supported by the filter body 11 having the porosity of 69%, the relationship between the porosity of the gas purification filter 20 and the mean particle size of the catalyst particles. Furthermore, the double-dotted chain line graphs shown in FIGs. 6 and 7 each show, in the gas purification filter 20 where the gas purification catalyst 12 is supported by the filter body 11 having the porosity of 75%, the relationship between the porosity of the gas purification filter 20 and the mean particle size of the catalyst particles. Then, the dotted line graphs shown in FIGs. 6 and 7 each show, in the gas purification filter 20 where the gas purification catalyst 12 is supported by the filter body 11 having the porosity of 82%, the relationship between the porosity of the gas purification filter 20 and the mean particle size of the catalyst particles.

As described above with reference to FIG. 5, the porosity (horizontal axis) of the gas purification filter 20 is set at not less than 6% and not greater than 20% (preferably not less than 7% and not greater than 17%). Thus, for example, in a case in which the gas purification catalyst 12 is supported by the filter body 11 having the porosity of 55% (dashed line graph), in order to set the porosity of the gas purification filter 20 at not less than 6% and not greater than 20%, the mean particle size of the gas purification catalyst 12 can be set at not less than 10 $\mu$m and not greater than 250 $\mu$m (see FIG. 7 for the upper limit value).

Moreover, for example, in a case in which the gas purification catalyst 12 is supported by the filter body 11 having the porosity of 62% (single-dotted chain line graph), in order to set the porosity of the gas purification filter 20 at not less than 6% and not greater than 20%, the mean particle size of the gas purification catalyst 12 can be set at not less than 2 $\mu$m and not greater than 150 $\mu$m (the lower limit value is not shown, and see FIG. 6 for the upper limit value). Furthermore, for example, in a case in which the gas purification catalyst 12 is supported by the filter body 11 having the porosity of 69% (solid line graph), in order to set the porosity of the gas purification filter 20 at not less than 6% and not greater than 20%, the mean particle size of the gas purification catalyst 12 can be set at not less than 1.5 $\mu$m and not greater than 50 $\mu$m (the lower limit value is not shown, and, see FIGs. 6 and 7 for the upper limit value).

Moreover, for example, in a case in which the gas purification catalyst 12 is supported by the filter body 11 having the porosity of 75% (double-dotted chain line graph), in order to set the porosity of the gas purification filter 20 at not less than 6% and not greater than 20%, the mean particle size of the gas purification catalyst 12 can be set at not less than 1.3 $\mu$m and not greater than 25 $\mu$m (the lower limit value is not shown, and see FIGs. 6 and 7 for the upper limit value). Furthermore, for example, in a case in which the gas purification catalyst 12 is supported by the filter body 11 having the porosity of 82% (dotted line graph), in order to set the porosity of the gas purification filter 20 at not less than 6% and not greater than 20%, the mean particle size of the gas purification catalyst 12 can be set at not less than 1.1 $\mu$m and not greater than 17 $\mu$m (the upper limit value and the lower limit value are not shown). As can be seen in FIG. 5, 6, the mean particle size of the gas purification catalyst 12 can be set at not less than 1.1 $\mu$m and not greater than 30 $\mu$m in order to obtain the ratio of reaction rate higher than that of the conventional gas purification filter.

In the gas purification filter described above in Patent Document 1 (the bag filter described in paragraph [0023] of Patent Document 1), the porosity of the filter body calculated based on the above-described equation (1) is considered as 58% (assume that a glass fiber (density $2.5 \times 10^6$ (g/m$^3$)) is used). Moreover, the mean particle size of the gas purification catalyst supported by the filter body is 0.1 $\mu$m. Therefore, in the gas purification filter described in Patent Document 1, the porosity of the gas purification filter including the filter body and the gas purification catalyst is considered as less than 6%, according to FIGs. 6 and 7 described above.

Moreover, in the gas purification filter described above in Patent Document 2 (the bag filter described in table 1 of Patent Document 2), the porosity of the filter body calculated based on the above-described equation (1) is considered as 79% (assume that the glass fiber is used as in Patent Document 1). Moreover, the mean particle size of the gas purification catalyst supported by the filter body is 1 $\mu$m. Therefore, in the gas purification filter described in Patent Document 1, the porosity of the gas purification filter including the filter body and the gas purification catalyst is considered as less than 6%, according to FIGs. 6 and 7 described above.

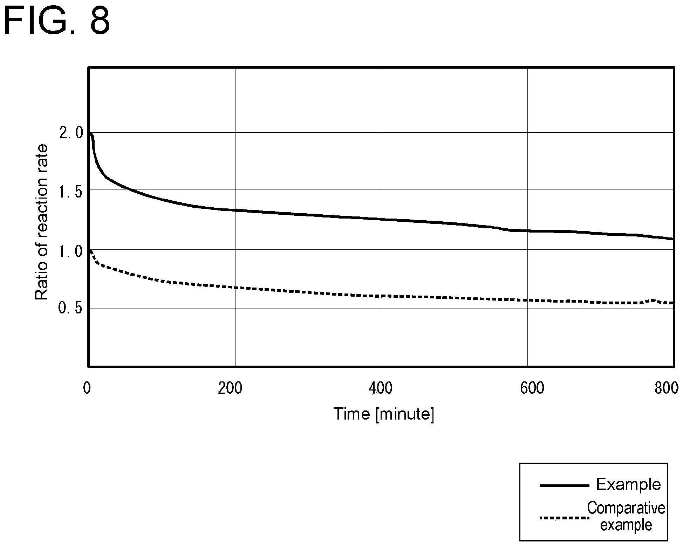

FIG. 8 shows graphs indicating a temporal change in ratio of reaction rate between Example and Comparative Example. In FIG. 7, the solid line graph shows Example and the dashed line graph shows Comparative Example. The vertical axis indicates a relative value when the reaction rate constant at 0 minutes (initial reaction rate constant) in Comparative Example is 1. The graphs shown in FIG. 8 are related to denitration reaction as an example. Moreover, FIG. 8 shows the graphs obtained in the experiments by the present inventors, and in FIG. 8, plots (where the reaction rate constants were calculated every ten minutes) are not illustrated for the sake of illustrative simplicity, and curves (the solid line and the dashed line) obtained by smoothly connecting the unillustrated plots are shown.

In both of Example and Comparative Example, the glass fiber was used as the fiber forming the filter body 11. Moreover, the basis weight of the filter body 11 was 880 $g/m^2$. Therefore, with the above-described equation (1), the porosity of the filter body 11 is 62%. Moreover, in both of Example and Comparative Example, the titanium-vanadium-based denitration catalyst was used as the gas purification catalyst 12. Moreover, the supported amount of the gas purification catalyst 12 to the filter body 11 was 250 $g/m^2$.

The mean particle size $D_{50}$ of the supported gas purification catalyst 12 was 10 $\mu$m in the Example and 0.8 $\mu$m in Comparative Example. The mean particle size of Comparative Example is similar to the mean particle size of the gas purification catalyst described above in Patent Document 2.

Moreover, as the conditions of the exhaust gas supplied to the gas purification filter 20, in both of Example and Comparative Example, the temperature was 200°C, and the average superficial velocity $u_m$ (equal to the gas average flow velocity $u_m$) was 0.8 m/minute. The composition of the exhaust gas was 150ppmvol. of nitrogen oxide, 10%vol. of carbon dioxide, 10%vol. of oxygen, 20%vol. of water, 105ppmvol. of ammonia, 2,000ppmvol. of sulfur dioxide, and 80%vol. of nitrogen.

As shown in FIG. 8, the ratio of reaction rate in Example was twice as high as that in Comparative Example in the initial state (time of 0 minutes). Then, even after a lapse of time while flowing the exhaust gas, the ratio of reaction rate in Example was decreased with the same tendency as the ratio of reaction rate in Comparative Example. Then, even after a lapse of 800 minutes, the ratio of reaction rate in Example did not go below the ratio of reaction rate in the initial state (time of 0 minutes) in Comparative Example. Therefore, as indicated by the solid line graph of FIG. 8, with Example according to an embodiment of the present invention, it is found, in particular, that catalytic performance in the initial state can be enhanced. Then, it is found that high catalytic performance (the reaction rate constant larger than that in Comparative Example) is maintained for a long period of time, making it possible to improve durability of the gas purification filter 20.

Moreover, for example, if catalytic performance at the same level as the conventional one suffices as required catalytic performance, it is possible to reduce the supported amount of the gas purification catalyst 12 to the filter body 11 compared to before. Thus, it is possible to reduce a production cost and a pressure loss, as well as to further decrease the differential pressure of the gas purification filter 20. Then, with the decrease in differential pressure, it is possible to reduce, for example, the frequency of backwashing and blower power, and to increase efficiency of a gas purification system 100 (to be described later) including the gas purification filter 20.

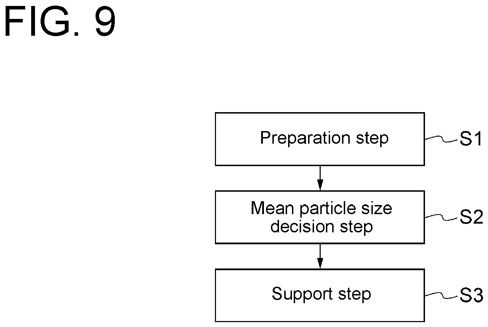

FIG. 9 is a flowchart showing a method for producing the gas purification filter 20 (may simply be referred to as the "producing method of the present embodiment" hereinafter) according to an embodiment of the present invention. The producing method of the present embodiment is related to a method for producing the above-described gas purification filter 20 which includes the filter body 11 formed by the fiber cloth and the gas purification catalyst 12 supported by the filter body 11. The producing method of the present embodiment includes a preparation step S1, a mean particle size decision step S2, and a support step S3.

The preparation step S1 includes preparing the filter body 11. The filter body 11 to be prepared may have a known physical property, or a physical property may be grasped by deciding the physical property of the prepared filter body 11. The physical property here is, for example, the porosity. As described above, the porosity represents a volume of voids occupying a space per unit volume. The porosity of the filter body 11 can be decided based on, for example, the above-described equation (1).

The mean particle size decision step S2 includes deciding, based on the porosity of the prepared filter body 11, the mean particle size $D_{50}$ of the gas purification catalyst 12 such that the gas purification filter 20 has the porosity of not less than 6% and not greater than 20% (preferably, not less than 7% and not greater than 17%). More specifically, as described above with reference to FIGs. 6 and 7, depending on the porosity of the filter body 11, the mean particle size $D_{50}$ of the gas purification catalyst 12 corresponding to the porosity of the gas purification filter 20 of not less than 6% and not greater than 20% is different. Thus, the mean particle size decision step S2 includes deciding, based on the relationship between the porosity of the prepared filter body 11 and, for example, FIGs. 6 and 7 described above, the mean particle size $D_{50}$ of the gas purification catalyst 12 such that the gas purification filter 20 can have the porosity of not less than 6% and not greater than 20%. As described above, the decided mean particle size $D_{50}$ is the mean particle size measured by the laser diffraction particle size distribution measuring device.

If the graph corresponding to the porosity of the filter body 11 neither exists FIG. 6 nor FIG. 7, the graph without the porosity existing in FIGs. 6 and 7 can be predicted from the graphs respectively shown in FIGs. 6 and 7, and the mean particle size $D_{50}$ can be decided based on the predicted graph.

The support step S3 includes supporting the gas purification catalyst 12 having the decided mean particle size

$D_{50}$ by the filter body 11. More specifically, the support step S3 includes preparing the gas purification catalyst 12 having the decided mean particle size $D_{50}$ and supporting the prepared gas purification catalyst 12 by the filter body 11. Although a support method is not particularly limited, a spray method for spraying a catalyst slurry including the particles of the gas purification catalyst 12 to the filter body 11 is preferable. That is, the support step S3 is preferably performed by the spray method. With the spray method, regardless of the particle size of the gas purification catalyst 12, it is possible to support the gas purification catalyst 12 by the filter body 11 by an amount in which the porosity of the gas purification filter 20 is not less than 6% and not greater than 20%.

When the gas purification catalyst 12 is sprayed to the filter body 11 by the spray method, it is preferable that the gas purification catalyst 12 is sprayed in the same direction as a direction in which the exhaust gas flows in the gas purification filter 20. Moreover, for example, the gas purification catalyst 12 may be sprayed to the filter body 11 formed into the bag shape in advance, or the sheet-shaped filter body 11 to which the gas purification catalyst 12 has been sprayed may be formed into the bag shape. Going through these steps, the bag filter is obtained which is formed by the gas purification filter 20 where the gas purification catalyst 12 is supported by the filter body 11.

With the above-described producing method, focusing on the porosity of the gas purification filter 20 and setting the porosity of the gas purification filter 20 at not less than 6% and not greater than 20%, it is possible to ensure the gas flow passage 13 inside the gas purification filter 20 and to suppress the excessive increase in differential pressure. Thus, it is possible to facilitate the flow of the exhaust gas inside the gas purification filter 20 and to increase the gas throughput. Furthermore, setting the porosity of the gas purification filter 20 at not less than 6% and not greater than 20%, it is possible to easily bring the exhaust gas flowing through the gas flow passage 13 into appropriate contact with the particles of the gas purification catalyst 12 and to suppress passing through of the exhaust gas. Therefore, it is possible to increase catalytic efficiency and to improve catalytic performance compared to before.

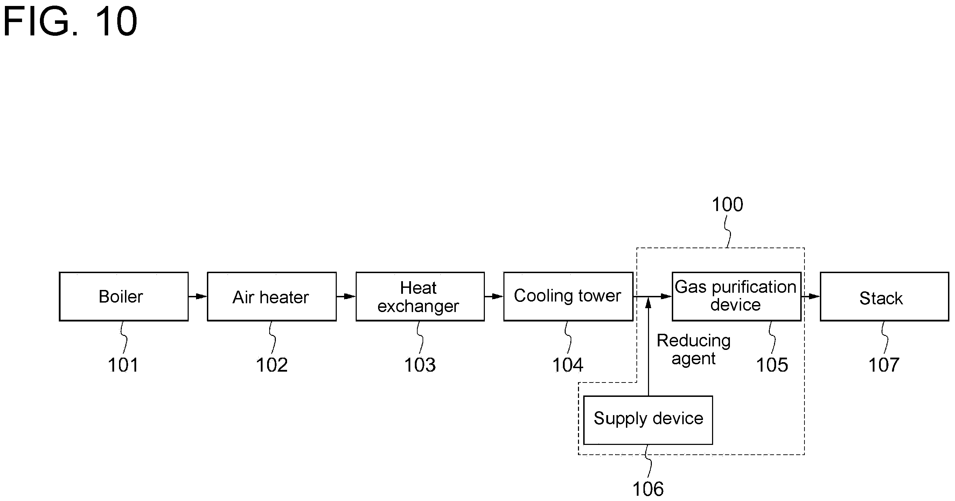

FIG. 10 is a system diagram of the gas purification system 100 according to an embodiment of the present invention. The gas purification system 100 is provided to purify an exhaust gas from a combustion device (for example, a boiler 101). The gas purification system 100 includes a gas purification device 105 inside which the above-described gas purification filter 20 (not shown in FIG. 10) is disposed. The gas purification filter 20 disposed in the gas purification device 105 includes the gas purification catalyst 12 having the denitration function. That is, the gas purification catalyst 12 includes the denitration catalyst.

Moreover, the gas purification system 100 further includes a supply device 106 for supplying a reducing agent for nitrogen oxide to a gas flowing upstream of the gas purification filter 20. The reducing agent includes, for example, ammonia water, ammonia gas, urea water, hydrocarbon, and carbon monoxide.

A supply position of the reducing agent is arranged between the gas purification system 100 and a cooling tower 104 in the illustrated example. However, any position will do as long as the reducing agent can be supplied upstream of the gas purification filter 20. For example, furnace denitration in a combustion furnace (not shown) attached to the boiler 101 may be performed by supplying the reducing agent to the inside of the combustion furnace. Thus, it is possible to perform denitration of the exhaust gas by using the supplied reducing agent. The supply amount of the reducing agent in this case can be changed in accordance with the concentration of nitrogen oxide in the exhaust gas associated with fluctuations in operation conditions.

In the boiler 101, steam is generated by heat exchange between water (liquid) and heat of a combustion gas generated by combustion in the above-described combustion furnace. The heat exchange is performed in a heat exchange device (not shown) provided for the boiler 101. The generated steam is used to, for example, rotate a steam turbine (not shown). Moreover, the combustion gas generated in the combustion furnace is supplied to an air heater 102 and a heat exchanger 103 as the exhaust gas. In the air heater 102 and the heat exchanger 103, air is heated by heat of the exhaust gas, and the heated air is used to, for example, heat combustion air and water supplied to the boiler 101. Moreover, the exhaust gas is supplied to the cooling tower 104. In the cooling tower 104, if the temperature of the exhaust gas from the boiler 101 is, for example, about 220°C, the exhaust gas is cooled to, for example, about 170°C in the cooling tower 104.

The supply device 106 supplies the reducing agent to the cooled exhaust gas. Thus, a gas including the reducing agent is transmitted through the gas purification filter 20 of the gas purification device 105. As a result, in the denitration catalyst (gas purification catalyst 12) supported by the gas purification filter 20, it is possible to perform denitration of the exhaust gas by using the reducing agent. Denitration here refers to conversion of nitrogen monoxide and nitrogen dioxide into nitrogen by using the reducing agent. The reducing agent is consumed by denitration, suppressing leakage of the reducing agent downstream of the gas purification filter 20.

Moreover, the gas purification catalyst 12 may include an oxidation catalyst, in addition to the above-described denitration catalyst. Including the oxidation catalyst, it is possible to perform oxidative decomposition of the reducing agent, even if the exhaust gas does not contain nitrogen oxide. Oxidation here refers to conversion of hydrocarbon, carbon monoxide, and ammonia (if included as the reducing agent) into steam, carbon dioxide, and nitrogen oxide, respectively by using oxygen. With oxidative decomposition of the reducing agent, it is possible to suppress leakage of the reducing agent downstream of the gas purification filter 20. If the gas purification catalyst 12 does not include the denitration catalyst, the reducing agent may not be used.

An effect of suppressing leakage of the reducing agent is more advantageous in a case in which furnace denitration is performed by supplying the reducing agent into the combustion furnace. In particular, if the supply amount of the reducing agent is changed in association with the fluctuations in operation conditions as described above, the reducing agent easily leaks downstream of the gas purification filter 20 when the supply amount of the reducing agent is increased. Since oxidative decomposition of the reducing agent can be performed in the gas purification filter 20, it is possible to suppress leakage of the reducing agent downstream of the gas purification filter 20 by oxidative decomposition of the reducing agent even if the supply amount of the reducing agent is increased.

Then, the gas after denitration is released to the atmosphere through a stack 107.

According to the gas purification system 100, it is possible to purify the exhaust gas by using the gas purification device 105 which includes the gas purification filter 20 improved in catalytic performance compared to before. Thus, it is possible to increase a purification flow rate of the exhaust gas and to efficiently purify the exhaust gas.

Moreover, cooled by the cooling tower 104, the temperature of the exhaust gas supplied to the gas purification system 100 is about, for example, 170°C. Denitration is normally performed at a high temperature (for example, not less than 200°C). However, since catalyst efficiency of the gas purification filter 20 in the gas purification system 100 is high, it is possible to sufficiently perform denitration of the exhaust gas even at a relatively low temperature of, for example, about 170°C. Thus, it is possible to perform respective treatments of denitration, desulfurization, dioxin removal, dust removal, and demineralization in the gas purification system 100 by causing the gas purification catalyst 12 of the gas purification system 100 to have the functions of both denitration and oxidation. Thus, it is possible to simultaneously perform the respective treatments in the gas purification system 100 and to downsize the gas purification system 100.

Furthermore, as shown in FIG. 10, the exhaust gas from the boiler 101 is supplied to the gas purification system 100 without re-heating (incalescence) by, for example, a re-heater. In this regard, conventionally, the gas purification system 100 includes a reaction dust collecting device (not shown) where a denitration reaction tower (not shown) is installed in a latter stage thereof. In the reaction dust collecting device, the desulfurization and demineralization treatments are performed, in addition to dioxin removal. Thus, conventionally, in a cooling tower (not shown), the exhaust gas is cooled to have the temperature of, for example, not greater than 200°C and more specifically, for example, about 150°C to 180°C.

The denitration reaction is performed at, for example, not less than 200°C. Thus, conventionally, the re-heater is installed between the reaction dust collecting device and the denitration reaction tower, and the gas cooled temporarily is re-heated to have a temperature suitable for the denitration reaction. However, in the gas purification system 100 according to an embodiment of the present invention, the exhaust gas need not be re-heated, and thus power, vapor, and the like for re-heating are not needed. As a result, it is possible to improve energy efficiency. Moreover, since re-heating is not needed, it is possible to supply vapor for re-heating to, for example, a steam turbine (not shown). As a result, it is possible to improve power generation efficiency.

Reference Signs List

| 1 | Tubular portion |
|---|---|
| 2 | Lid portion |
| 3 | Opening portion |
| 10 | Bag filter |
| 11 | Filter body |
| 12 | Gas purification catalyst |
| 13 | Gas flow passage |
| 20 | Gas purification filter |
| 100 | Gas purification system |
| 101 | Boiler |
| 102 | Air heater |
| 103 | Heat exchanger |
| 104 | Cooling tower |
| 105 | Gas purification device |
| 106 | Supply device |
| 107 | Stack |

**Claims**

1.  A gas purification filter comprising a filter body formed by a fiber cloth and a gas purification catalyst supported by the filter body,
    wherein the gas purification filter has a porosity of not less than 6% and not greater than 20%, the porosity representing a volume of voids occupying a space per unit volume.

2.  The gas purification filter according to claim 1,
    wherein the porosity is not less than 7% and not greater than 17%.

3.  The gas purification filter according to claim 1 or 2,

    wherein the filter body has the porosity of not less than 55% and not greater than 82%, and
    wherein the gas purification catalyst has a mean particle size $D_{50}$ of not less than 1 $\mu$m and not greater than 250 $\mu$m.

4.  The gas purification filter according to any one of claims 1 to 3,
    wherein the filter body has a basis weight of not less than 500 g/m$^2$ and not greater than 1,200 g/m$^2$.

5.  The gas purification filter according to any one of claims 1 to 4,
    wherein a fiber contained in the filter body includes any one of polyester fiber, polyamide fiber, polyphenylene-sulfide fiber, polyacrylic fiber, polypropylene fiber, polyimide fiber, glass fiber, and polyfluoroethylene fiber.

6.  The gas purification filter according to claim 5,
    wherein the fiber has a largest diameter of not greater than 15 $\mu$m in a fiber cross-section.

7.  A method for producing a gas purification filter including a filter body formed by a fiber cloth and a gas purification catalyst supported by the filter body, the method comprising:

    a preparation step of preparing the filter body;
    a mean particle size decision step of deciding, based on a porosity of the prepared filter body, a mean particle size $D_{50}$ of the gas purification catalyst such that the gas purification filter has the porosity of not less than 6% and not greater than 20%; and
    a support step of supporting the gas purification catalyst having the decided mean particle size $D_{50}$ by the filter body.

8.  The method for producing the gas purification filter according to claim 7,
    wherein the support step is performed by a spray method.

9.  A gas purification system for purifying an exhaust gas from a combustion device, comprising:
    a gas purification device inside which the gas purification filter according to any one of claims 1 to 6 is disposed.

10. The gas purification system according to claim 9,

    wherein the gas purification catalyst includes a denitration catalyst, and
    wherein the gas purification system further comprises a supply device for supplying a reducing agent for nitrogen oxide to a gas flowing upstream of the gas purification filter.

**Patentansprüche**

1.  Ein Gasreinigungsfilter aufweisend einen Filterkörper, der von einem Fasertuch und von einem von dem Filterkörper gestützten Gasreinigungskatalysator gebildet wird,
    wobei der Gasreinigungsfilter eine Porosität von nicht weniger als 6% und nicht größer als 20% hat, wobei die Porosität ein Volumen von Luftporen darstellt, welches einen Raum pro Volumeneinheit einnimmt.

2.  Der Gasreinigungsfilter nach Anspruch 1,
    wobei die Porosität nicht kleiner als 7% und nicht größer als 17% ist.

**3.** Der Gasreinigungsfilter nach Anspruch 1 oder 2,

wobei der Filterkörper eine Porosität hat, die nicht kleiner als 55% und nicht größer als 82% ist, und wobei der Gasreinigungskatalysator eine mittlere Partikelgröße $D_{50}$ von nicht weniger als 1 $\mu$m und nicht größer als 250 $\mu$m hat.

**4.** Der Gasreinigungsfilter nach irgendeinem der Ansprüche 1 bis 3,
wobei der Filterkörper ein Flächengewicht von nicht weniger als 500 g/m$^2$ und nicht größer als 1.200 g/m$^2$ hat.

**5.** Der Gasreinigungsfilter nach irgendeinem der Ansprüche 1 bis 4,
wobei eine in dem Filterkörper enthaltene Faser irgendeine Faser von einer Polyesterfaser, Polyamidfaser, Polyphenylensulfidfaser, Polyacrylfaser, Polypropylenfaser, Polyimidfaser, Glasfaser und Polyfluorethylenfaser umfasst.

**6.** Der Gasreinigungsfilter nach Anspruch 5,
wobei die Faser einen größten Durchmesser von nicht größer als 15 $\mu$m in einem Faserquerschnitt hat.

**7.** Ein Verfahren zur Herstellung eines Gasreinigungsfilters umfassend einen Filterkörper, der von einem Fasertuch und von einem von dem Filterkörper gestützten Gasreinigungskatalysator gebildet wird, wobei das Verfahren aufweist;

einen Präparationsschritt des Präparierens des Filterkörpers;
einen mittlere-Partikelgröße-Bestimmungsschritt des Bestimmens, auf der Grundlage der Porosität des präparierten Filterkörpers, eine mittlere Partikelgröße $D_{50}$ des Gasreinigungskatalysators derart, dass der Gasreinigungsfilter eine Porosität von nicht kleiner als 6% und nicht größer als 20% hat; und
einen Stützungsschritt des Stützens des Gasreinigungskatalysators, der die bestimmte mittlere Partikelgröße $D_{50}$ hat, durch den Filterkörper.

**8.** Das Verfahren zur Herstellung des Gasreinigungsfilters nach Anspruch 7, wobei der Stützungsschritt durch ein Sprühverfahren durchgeführt wird.

**9.** Ein Gasreinigungssystem zum Reinigen von Abgasen eines Verbrennungsmotors, aufweisend:
eine Gasreinigungsvorrichtung, innerhalb derer der Gasreinigungsfilter nach irgendeinem der Ansprüche 1 bis 6 angeordnet ist.

**10.** Das Gasreinigungssystem nach Anspruch 9,

wobei der Gasreinigungskatalysator einen Denitrierungskatalysator umfasst, und
wobei das Gasreinigungssystem ferner eine Zuführvorrichtung zum Zuführen eines Reduktionsmittels für Stickoxid zu einem Gas, das stromauf des Gasreinigungsfilter strömt.

## Revendications

**1.** Filtre de purification de gaz comprenant un corps de filtre formé par un tissu fibreux et un catalyseur de purification de gaz porté par le corps de filtre,
dans lequel le filtre de purification de gaz possède une porosité qui n'est pas inférieure à 6 % et qui n'est pas supérieure à 20 %, la porosité représentant un volume de cavités occupant un espace par unité de volume.

**2.** Filtre de purification de gaz selon la revendication 1,
dans lequel la porosité n'est pas inférieure à 7 % et n'est pas supérieure à 17 %.

**3.** Filtre de purification de gaz selon la revendication 1 ou 2,

dans lequel le corps de filtre possède la porosité qui n'est pas inférieure à 55 % et qui n'est pas supérieure à 82 %, et
dans lequel le catalyseur de purification de gaz possède une taille particulaire moyenne $D_{50}$ qui n'est pas inférieure à 1 $\mu$m et qui n'est pas supérieure à 250 $\mu$m.

4. Filtre de purification de gaz selon l'une quelconque des revendications 1 à 3,
dans lequel le corps de filtre possède un grammage qui n'est pas inférieur à 500 g/m$^2$ et qui n'est pas supérieur à 1200 g/m$^2$.

5. Filtre de purification de gaz selon l'une quelconque des revendications 1 à 4,
dans lequel une fibre contenue dans le corps de filtre comporte l'une quelconque parmi une fibre de polyester, une fibre de polyamide, une fibre de poly(sulfure de phénylène), une fibre de polyacrylique, une fibre de polypropylène, une fibre de polyimide, une fibre de verre et une fibre de polyfluoroéthylène.

6. Filtre de purification de gaz selon la revendication 5,
dans lequel la fibre possède un diamètre le plus grand qui n'est pas supérieur à 15 $\mu$m dans une section transversale de fibre.

7. Méthode pour la production d'un filtre de purification de gaz comportant un corps de filtre formé par un tissu fibreux et un catalyseur de purification de gaz porté par le corps de filtre, la méthode comprenant :

une étape de préparation consistant à préparer le corps de filtre ;
une étape de décision de taille particulaire moyenne consistant à décider, sur la base d'une porosité du corps de filtre préparé, une taille particulaire moyenne $D_{50}$ du catalyseur de purification de gaz de sorte que le filtre de purification de gaz possède la porosité qui n'est pas inférieure à 6 % et qui n'est pas supérieure à 20 % ; et
une étape de support consistant à porter le catalyseur de purification de gaz ayant la taille particulaire moyenne $D_{50}$ décidée par le corps de filtre.

8. Méthode pour la production du filtre de purification de gaz selon la revendication 7,
dans laquelle l'étape de support est réalisée par une méthode de pulvérisation.

9. Système de purification de gaz pour la purification d'un gaz d'échappement provenant d'un dispositif de combustion, comprenant :
un dispositif de purification de gaz à l'intérieur duquel le filtre de purification de gaz selon l'une quelconque des revendications 1 à 6 est disposé.

10. Système de purification de gaz selon la revendication 9,

dans lequel le catalyseur de purification de gaz comporte un catalyseur de dénitrification, et
dans lequel le système de purification de gaz comprend en outre un dispositif d'alimentation pour alimenter, avec un agent de réduction pour oxyde d'azote, un gaz circulant en amont du filtre de purification de gaz.

# FIG. 1

Purge gas

Exhaust gas

# FIG. 2

Purge gas ← ... → Exhaust gas

11
12
13
20

# FIG. 3

Purge gas

Exhaust gas

11

12

13   A

20

# FIG. 4

FIG. 5

# FIG. 6

Porosity of gas purification filter [%]

Mean particle size [μm]

- - - Porosity 55%

—··— Porosity 62%

——— Porosity 69%

—···— Porosity 75%

········ Porosity 82%

# FIG. 7

# FIG. 8

# FIG. 9

| | |
|---|---|
| Preparation step | S1 |
| ↓ | |
| Mean particle size<br>decision step | S2 |
| ↓ | |
| Support step | S3 |

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017177046 A
- WO 2018174137 A1
- JP 2016049468 A

- JP 2014008460 A
- JP 2014166614 A